# EUROPÄISCHE PATENTSCHRIFT

(11) **EP 3 558 759 B1**
(45) Veröffentlichungstag und Bekanntmachung des Hinweises auf die Patenterteilung: **11.11.2020**
(21) Anmeldenummer: 17808928.0
(22) Anmeldetag: 05.12.2017
(51) Int. Cl.: B60R 21/231

(54) **FRONTGASSACK**
FRONT AIRBAG
SAC GONFLABLE AVANT

(30) Priorität: 20.12.2016 DE 202016107171 U
(43) Veröffentlichungstag der Anmeldung: 30.10.2019
(73) Patentinhaber: Dalphi Metal España, S.A., 36213 Vigo (ES)
(72) Erfinder: BANOS RUIZ, Liborio, 47014 Valladolid (ES); MARTINEZ RAYA, Abraham, 47012 Valladolid (ES)
(74) Vertreter: ZF Patentabteilung - DIPS
(86) Internationale Anmeldenummer: PCT/EP2017/081516
(87) Internationale Veröffentlichungsnummer: WO 2018/114323

(56) Entgegenhaltungen:
- DE-A1-102006 056 919
- DE-A1-102014 113 277

## Beschreibung

Die Erfindung betrifft einen Frontgassack, insbesondere für einen Beifahrer. Frontgassäcke außerhalb des Fahrzeuglenkrads werden hauptsächlich in der Instrumententafel im Bereich des Beifahrersitzes verbaut. In einer bekannten Konstruktion weist der Gassack eine im aufgeblasenen Zustand zum Beifahrer hinweisende Frontwand auf, die eine Prallfläche zum Auffangen des Fahrzeuginsassen bildet. Diese Frontwand erstreckt sich normalerweise schräg bezüglich der Vertikalrichtung, sodass der Fahrzeuginsasse mit dem Kopf und dem Oberkörper in den Gassack eintauchen kann. Bei einem bekannten Frontgassack ist die Frontwand entlang ihres Umfangsrandes mit einer generell trichterförmigen Umfangswand verbunden, die auf einer der Frontwand abgewandten Rückseite einen Einblasmund aufweist, über den der Gassack befüllt wird und der normalerweise auch einen Fixierabschnitt bildet, der eine Befestigung des gesamten Frontgassacks an der Instrumententafel ermöglicht. Bei solchen an sich bekannten Gassäcken hat die Frontwand im Wesentlichen eine rechteckige oder sechseckige Gestalt hat, wobei natürlich die Ecken abgerundet sind.

Aus der DE 10 2006 056919 ist ein Frontgassack nach dem Oberbegriff des Anspruchs 1 bekannt.

Angestrebt wird ein möglichst umfassender Schutz für den Kopf und Oberkörper des Fahrzeuginsassen, auch bei unterschiedlichen Arten von Frontalkollisionen, darunter auch einem teilversetzten Frontalaufprall. Bei einem derartigen Aufprall, beispielsweise mit einer Überlappung von etwa 35 % und einem Auftreffwinkel, der um 15° gegen die Fahrzeuglängsachse nach außen versetzt ist, soll insbesondere der Kopf des Fahrzeuginsassen vom Frontgassack aufgefangen werden.

Aufgabe der Erfindung ist es, einen verbesserten Frontgassack zu schaffen, der insbesondere bei Frontalkollisionen mit geringer Überdeckung einen guten Schutz für Kopf und Oberkörper des Fahrzeuginsassen bietet.

Diese Aufgabe wird mit einem Frontgassack mit den Merkmalen des Anspruchs 1 gelöst.

Der erfindungsgemäße Frontgassack hat eine aus einer Frontwand und einer Umfangswand gebildete Außenhülle, wobei an der Umfangswand ein Fixierabschnitt zur fahrzeugfesten Befestigung des Frontgassacks vorgesehen ist. Die Frontwand stellt eine Prallfläche für einen Fahrzeuginsassen dar und ist an einem Umfangsrand umlaufend mit einem ersten Abschnitt eines Umfangsrands der Umfangswand verbunden, insbesondere vernäht. Die Länge des Frontwand-Umfangsrands und des ersten Abschnitts des Umfangsrand-Umfangsrands sind gleich. Zumindest ein zweiter und ein dritter Abschnitt des Umfangswand-Umfangsrands sind miteinander verbunden, um die Umfangswand in Umfangsrichtung zu schließen. Die Frontwand hat eine auf eine Einbauausrichtung (gemeint ist damit der eingebaute, aufgeblasene Zustand des Frontgassacks) bezogene Längsrichtung, die durch ein unteres und ein oberes Ende der Frontwand definiert ist. Üblicherweise verläuft die Längsrichtung in Frontansicht auf den eingebauten, aufgeblasenen Frontgassack vertikal. Die Frontwand weist bezüglich der Längsrichtung einseitig eine seitliche Auswölbung auf und ist bezüglich der Längsrichtung nicht spiegelsymmetrisch ausgebildet. Der Begriff "seitlich" bezieht sich dabei auf eine Ansicht von vorne auf die Frontwand des eingebauten, aufgeblasenen Frontgassacks und die dann bezüglich der Längsrichtung seitlich liegenden Ränder der Frontwand. Einer dieser Seitenränder ist dabei deutlich weiter nach außen gewölbt als der gegenüberliegende Seitenrand und formt sozusagen ein abstehendes, aufgeblasenes Ohr. Diese asymmetrische Form vergrößert die Prallfläche und verbessert den Schutz des Fahrzeuginsassen bei einem teilversetzten Aufprall.

Vorzugsweise liegt im eingebauten, aufgeblasenen Zustand die Auswölbung an der zum Fahrzeuginnenraum gerichteten Seite des Frontgassacks.

Die Umfangswand ist vorzugsweise im Wesentlichen trichterförmig ausgebildet, wobei sie nicht notwendigerweise symmetrisch ist. Die Umfangswand verjüngt sich vorzugsweise kontinuierlich zum Fixierabschnitt hin, und der Fixierabschnitt liegt im Bereich mit dem geringsten Durchmesser des Frontgassacks.

Eine stabilere Form sowie eine flachere Ausprägung der Frontwand wird erfindungsgemäß dadurch erreicht, dass der erste Abschnitt des Umfangsrands der Umfangswand eine zur seitlichen Auswölbung der Frontwand spiegelbildliche seitliche Auswölbung aufweist, wobei diese beiden Auswölbungen an ihren Umfangsrändern direkt aneinander fixiert sind. Somit werden die Zugkräfte im Frontgassack durch das Hinzufügen der Auswölbung zu einer ansonsten symmetrischen Form nicht wesentlich verändert.

Der Fixierabschnitt definiert eine sogenannte Fixierebene, die üblicherweise auch die Mündungsöffnung des Gassacks bildet.

Um eine Rotation des Gassacks beim Aufblasen um eine im Wesentlichen in Fahrzeugrichtung verlaufende Achse zu verhindern, hat die Frontwand bezogen auf den aufgeblasenen, eingebauten Zustand einen durch den Fixierabschnitt gebildeten Einblasmund und einen diesem unmittelbar gegenüberliegenden Frontwandabschnitt. Die Frontwand ist nur oberhalb des Frontwandabschnitts unsymmetrisch ist und/oder hat dort eine Auswölbung, womit die vom einströmenden Gas auf die Frontwand aufgebrachten Kräfte symmetrisch sind.

In einer bevorzugten Ausführungsform verläuft im aufgeblasenen Zustand des Frontgassacks eine nachfolgend noch erläuterte Ebene durch das Zentrum des durch den Fixierabschnitt gebildeten Einblasmundes nach vorne zur Frontwand. Der Frontgassack hat eine durch den Fixierabschnitt gebildete Fixierebene zur modulseitigen Befestigung. Im aufgeblasenen, eingebauten Zustand des Frontgassacks erstreckt sich die Ebene durch das Zentrum des durch den Fixierabschnitt gebildeten Einblasmunds und schneidet die Fixierebene in einer im Wesentlichen horizontalen Linie. Diese Ebene verläuft zu dem, dem Einblasmund unmittelbar gegenüberliegenden Frontwandabschnitt, wobei die seitliche Auswölbung der Frontwand entlang der Längsrichtung und versetzt zu der Ebene angeordnet ist.

Die seitliche Auswölbung der Frontwand verläuft versetzt zu der Ebene und erstreckt sich damit nicht in die Ebene. Entlang dieser Ebene verläuft üblicherweise auch die Haupteinströmungsrichtung des einströmenden Gases, welches auf die Frontwand trifft. Wenn die Auswölbung in dieser Ebene liegt, so tritt eine Rotation des Gassacks beim Entfalten auf, die sich negativ auf die Belastungswerte auswirken kann. Wenn jedoch die Frontwand in dem Bereich der Ebene im Wesentlichen symmetrisch ist, sind die links und rechts einer gedachten Mittellinie (die auch eine Symmetrielinie in diesem Bereich darstellt) eingebrachten Kräfte durch das auftreffende Gas gleich. Damit erfolgt keine Rotation des Gassacks aufgrund des einströmenden Gases.

Diese Anordnung bewirkt insbesondere, dass sich die Ausrichtung der Frontwand im aufgeblasenen Gassack gegenüber einer Gassackform ohne die Auswölbung nicht wesentlich verändert und die Frontwand beim aufgeblasenen Gassack nicht gegenüber der eines symmetrischen Gassacks mit den gleichen Dimensionen, aber ohne die Auswölbung, verkippt ist.

Das erfindungsgemäße Design lässt sich daher auf einfache Weise an unterschiedliche Fahrzeuggeometrien anpassen. Es sind auch asymmetrische Frontwandformen einfach einsetzbar, ohne dass sich die generelle Ausrichtung der Frontwand im aufgeblasenen Zustand des Frontgassacks wesentlich verändert.

Die vorgenannte, durch das Zentrum des Einblasmundes verlaufende Ebene erstreckt sich insbesondere senkrecht zur Fixierebene.

In einer Vorderansicht auf die Frontwand des eingebauten, aufgeblasenen Frontgassacks ist damit die Auswölbung entlang der Längsrichtung gegenüber dem Fixierabschnitt verschoben, insbesondere nach oben verschoben, um für den Kopf eine größere Rückhaltefläche zur Verfügung zu stellen.

Die Frontwand ist daher bevorzugt in der Auswölbung breiter als im Bereich der gedachten Ebene, wobei die Zunahme in der Breite beispielsweise etwa 20 - 100 % betragen kann.

Die Frontwand weist, bezogen auf den eingebauten, aufgeblasenen Zustand, vorzugsweise eine gedachte, vertikale Mittellinie auf. Die Frontwand ist vorteilhaft im Bereich der durch das Zentrum des Einblasmundes verlaufenden Ebene symmetrisch bezüglich der Mittellinie und im Bereich der seitlichen Auswölbung nicht spiegelsymmetrisch bezüglich der Mittellinie.

In einem bevorzugten Ausführungsbeispiel ist die Frontwand, bezogen auf den eingebauten, entfalteten Zustand des Frontgassacks, unterhalb der oben definierten Ebene spiegelsymmetrisch zur Mittellinie ausgebildet, und oberhalb dieser Ebene zumindest im Bereich der Auswölbung nicht spiegelsymmetrisch zur Mittellinie ausgebildet. Es hat sich herausgestellt, dass eine Vergrößerung der Frontwand zum Auffangen eines Fahrzeuginsassen bei einem versetzten Frontalaufprall vor allem im oberen Abschnitt des Frontgassacks (im eingebauten Zustand) erforderlich ist. Somit ist es möglich, das konventionelle Design des Frontgassacks mit symmetrischer Gestaltung im unteren Abschnitt des Frontgassacks beizubehalten, was die Stabilität des Gassacks beim Aufblasen sicherstellt, und lediglich einseitig im oberen Bereich eine Auswölbung in den Fahrzeuginnenraum hinzuzufügen.

Entlang der Mittellinie liegt bevorzugt jeder Normalenvektor der Frontwand in einer Ebene, die senkrecht auf der Fixierebene steht, die Frontwand ist also gegenüber einer symmetrischen Frontwand nicht verkippt und hat im Wesentlichen dieselbe Ausrichtung wie eine Frontwand ohne Auswölbung bei einem ansonsten identisch geformten Frontgassack.

Die durch das Zentrum des Einblasmundes verlaufende Ebene schneidet den Frontflächen-Umfangsrand außerhalb des Fixierabschnitts an zwei Schnittpunkten, wobei die Länge einer Strecke entlang der jeweiligen Seite der Umfangswand von jedem dieser Schnittpunkte zum Fixierabschnitt vorzugsweise im Wesentlichen gleich ist. Auch diese geometrischen Gegebenheiten sorgen dafür, dass die Frontwand dieselbe Ausrichtung beibehält, die sie hätte, wenn die Auswölbung nicht vorgesehen wäre.

Der Umfangswand-Umfangsrand ist bevorzugt durch den ersten, den zweiten und den dritten Abschnitt sowie den Fixierabschnitt gebildet, wobei der Fixierabschnitt zwischen dem zweiten und dem dritten Abschnitt liegt und der zweite und der dritte Abschnitt gleich lang sind. Bei der Fertigung des Frontgassacks werden beispielsweise die Frontwand und die Umfangswand an deren ersten Abschnitt miteinander verbunden sowie der zweite und der dritte Abschnitt der Umfangswand aufeinandergelegt und miteinander verbunden, beispielsweise durch Nähen, Schweißen oder Kleben, wodurch der Fixierabschnitt, der offengelassen wird, einen umfangsmäßig geschlossenen Einblasmund bildet.

Die Umfangswand lässt sich vorzugsweise als ein einziges, zusammenhängendes Zuschnittsteil ausführen, das sich als Ganzes flach ausbreiten lässt. Natürlich ist es möglich, dieses Zuschnittsteil aus verschiedenen, separat hergestellten Abschnitten zusammenzusetzen, und es ist auch denkbar, die einzelnen Abschnitte dieses Zuschnittsteils separat mit der Frontwand zu verbinden. Prinzipiell ist es jedoch möglich, die Umfangswand in der beschriebenen Form auszubilden.

Genauso lässt sich vorzugsweise die Frontwand als einziges, zusammenhängendes Zuschnittsteil bilden, wobei genau wie für die Umfangswand gilt, dass die Frontwand im realen Frontgassack durch mehrere, separat hergestellte Zuschnittsteile realisiert sein kann.

Die Frontwand und die Umfangswand sind vorzugsweise jeweils separat voneinander, d.h. die noch nicht aneinander befestigtem Zustand, flach ausbreitbar, was die Herstellung der einzelnen Zuschnittsteile vereinfacht. Die Geometrie der jeweiligen Umfangsränder lässt sich im Normalfall so wählen, dass abschnittsweise aneinander zu befestigende Teilbereiche der Umfangsränder verbunden werden können, indem die entsprechenden Abschnitte von Frontwand und Umfangswand flach aufeinandergelegt werden. Hierzu ist es vorteilhaft, wenn nicht nur die Länge des Frontwand-Umfangsrandes und des Umfangswand-Umfangsrandes exakt übereinstimmen, sondern auch die Krümmungen nicht zu unterschiedlich sind. Insbesondere im Bereich der Auswölbung ist eine exakte Übereinstimmung der Krümmungen der übereinanderliegenden Abschnitte bevorzugt.

Die Erfindung wird nachfolgend anhand eines Ausführungsbeispiels und mit Bezug auf die beigefügten Zeichnungen näher beschrieben. In den Zeichnungen zeigen:
- Figur 1 einen Zuschnitt für einen herkömmlichen, symmetrischen Frontgassack gemäß dem Stand der Technik;
- Figur 2 den Zuschnitt aus Figur 1 in einer anderen Anordnung der beiden Zuschnittsteile für die Umfangswand;
- Figur 3 einen Zuschnitt für einen erfindungsgemäßen Frontgassack in einer Anordnung der Zuschnittsteile analog zu Figur 1;
- Figur 4 den Zuschnitt aus Figur 3 in einer Anordnung der Zuschnittsteile analog zu Figur 2;
- Figur 5 eine schematische Schnittansicht des erfindungsgemäßen Frontgassacks im eingebauten und aufgeblasenen Zustand zur Verdeutlichung der geometrischen Verhältnisse;
- Figuren 6 und 7 eine schematische Veranschaulichung der Geometrie für die Frontwand eines erfindungsgemäßen Frontgassacks für verschiedene Gassackgeometrien; und
- Figur 8 einen möglichen weiteren Schritt in der Fertigung des erfindungsgemäßen Frontgassacks.

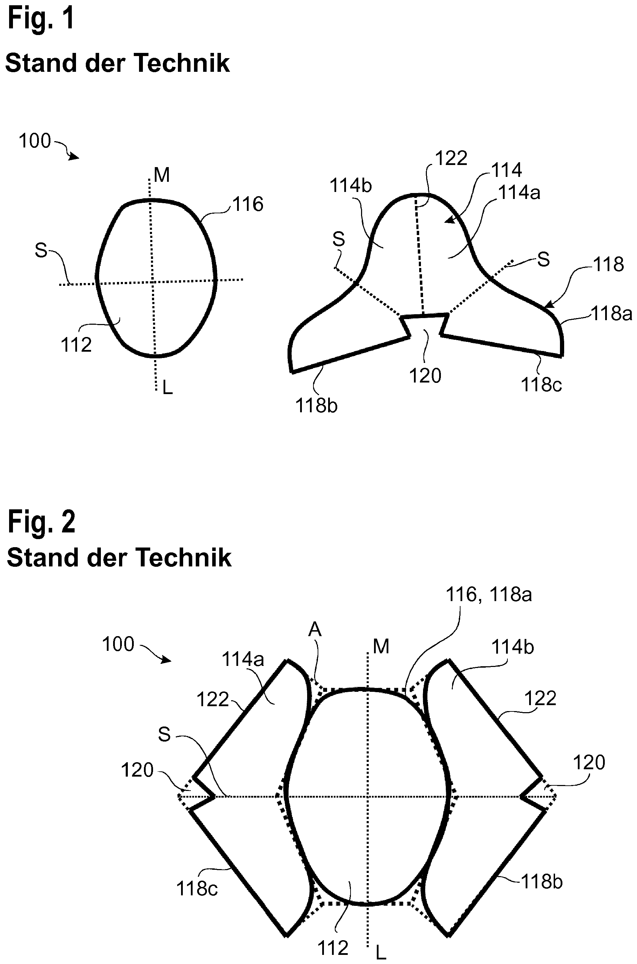

Die Figuren 1 und 2 zeigen einen Zuschnitt eines Frontgassacks 100 gemäß dem Stand der Technik.

Die Außenhülle des Frontgassacks 100 setzt sich aus einer Frontwand 112 und einer Umfangswand 114 zusammen. In der in Figur 1 gewählten Darstellung sind der Zuschnitt der Frontwand 112 und der Umfangswand 114 jeweils als ein einziges, einstückiges Zuschnittsteil gezeigt.

Zur Fertigung der Frontgassacks 100 aus der Frontwand 112 und der Umfangswand 114 wird ein Umfangsrand 116 der Frontwand 112 umlaufend mit einem ersten Abschnitt 118a eines Umfangsrands 118 der Umfangswand 114 verbunden. Außerdem wird ein zweiter Abschnitt 118b des Umfangswand-Umfangsrands 118 mit einem dritten Abschnitt 118c derselben verbunden.

Mittig zwischen dem zweiten Abschnitt 118b und dem dritten Abschnitt 118c ist im Umfangsrand 118 ein Fixierabschnitt 120 ausgespart, der im fertigen Frontgassack 100 zur fahrzeugfesten Befestigung des gesamten Frontgassacks 100 dient und der hier gleichzeitig einen Einblasmund zum Einlassen des Füllgases bildet.

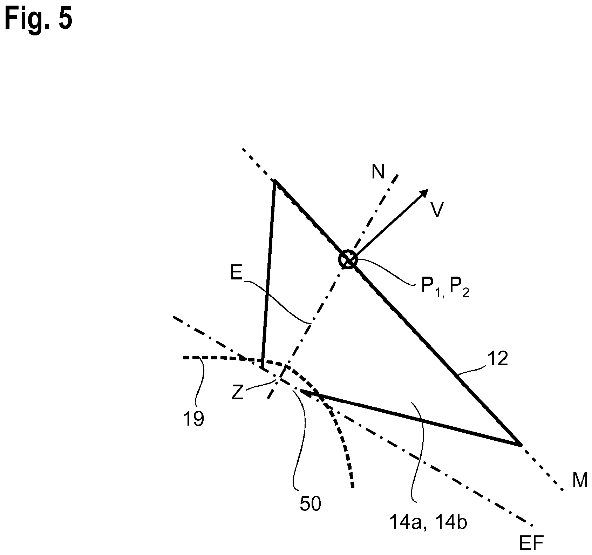

Die fahrzeugfeste Befestigung erfolgt im Regelfall bei einem Frontgassack 100 an einem Modulgehäuse, das in einer Instrumententafel 19 des Fahrzeugs befestigt wird, sodass der Frontgassack 100 dem Schutz eines Beifahrers dienen kann (angedeutet in Figur 5).

Figur 2 zeigt eine andere Darstellung der flach ausgebreiteten Zuschnitte von Frontwand 112 und Umfangswand 114, bei der die Umfangswand 114 entlang einer Trennlinie 122 in zwei spiegelbildlich symmetrische Teile aufgeteilt ist, die im aufgeblasenen Frontgassack 100 zwei gegenüberliegende Seiten 114a, 114b bilden. Die Trennlinie 122 geht durch den Fixierabschnitt 120, sodass dieser ebenfalls in zwei Teile aufgeteilt ist.

Die Seiten 114a, 114b der Umfangswand 114 liegen rechts und links neben der zentral angeordneten Frontwand 112, wobei der erste Umfangsrandabschnitt 118a der Umfangswand 114 jeweils dem Bereich des Umfangsrands 116 der Frontwand 112 zugewandt ist, mit dem er später verbunden wird.

Der in den Figuren 1 und 2 gezeigte Frontgassack 100 ist im aufgeblasenen Zustand symmetrisch bezüglich einer vertikal verlaufenden Mittellinie M, die, in den Figuren die Frontwand 112 entlang ihrer Längsrichtung L mittig in zwei spiegelbildliche Hälften teilt. Die Längsrichtung L entspricht in einer Einbauausrichtung einer Richtung, die durch ein unteres und ein oberes Ende der Frontwand 112 definiert ist, sodass das in den Figuren obere Ende der Frontwand 112 auch später in der eingebauten Lage im Fahrzeug den oberen Punkt des Frontgassacks 100 im aufgeblasenen Zustand bildet.

Eine gedachte Linie S verläuft von der einen Hälfte des Fixierabschnitts 120 über die erste Seite 114a der Umfangswand 114, die Frontwand 112 und die zweite Seite 114b der Umfangswand 114 zur zweiten Hälfte des Fixierabschnitts 120 (siehe auch Figur 5). In der in Figur 2 gezeigten Ansicht bildet die Linie S eine durchgehende Strecke. Teilt man die Zuschnittsteile wie in Figur 1 auf, so verteilt sich die Strecke S über die kurze Seite der Frontwand 112 sowie über die minimalen Distanzen vom Fixierabschnitt 120 zum ersten Abschnitt 118a des Umfangsrands 118 der Umfangswand 114. bei der in Figur 2 dargestellten Ausführungsform verläuft die Strecke S auch durch die Fixierabschnitte 120, die dann später in Einblasmund bilden.

Um alle Zuschnittsteile herum ist eine allgemeine Außenkontur A angezeichnet, die mit gepunkteten Linien markiert ist. Diese Außenkontur A gibt die prinzipiellen Abmessungen eines bekannten und häufig verwendeten sogenannten SQS-Gassacks (Square Bags) mit einer im Wesentlichen rechteckigen oder sechseckigen symmetrischen Prallfläche vor. Durch Änderungen der Abmessungen der Frontwand 112 sowie der beiden Seiten 114a, 114b der Umfangswand 114, bei der die Symmetrie bezüglich der Mittellinie sowie die Symmetrie der Konturen der beiden Seiten 114a, 114b der Umfangswand 114 beibehalten werden, lässt sich ein derartiger Gassack einfach und flexibel an verschiedene Einbausituationen anpassen, wobei stets ein symmetrischer Gassack erhalten wird.

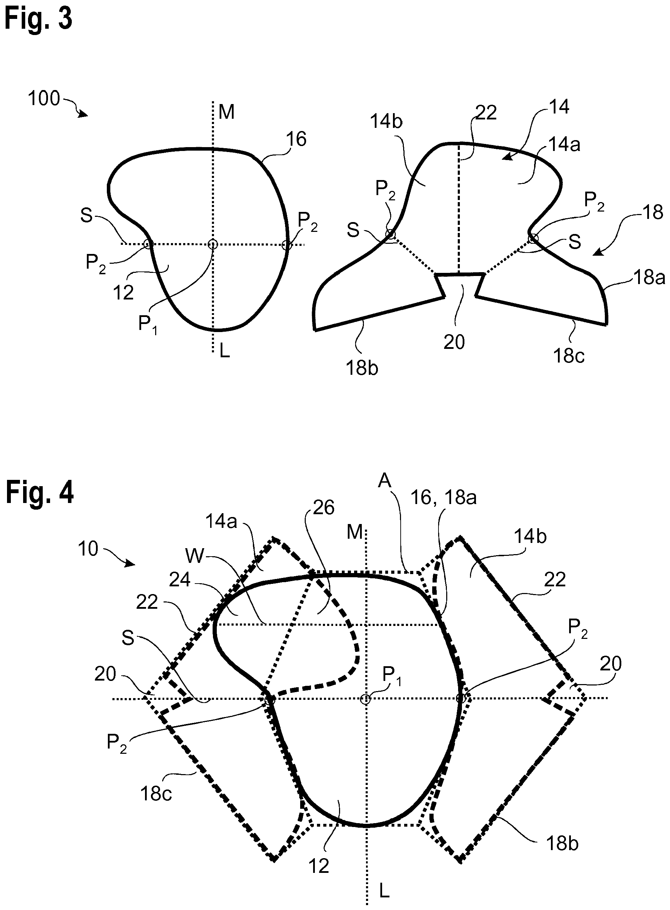

Die Figuren 3 und 4 zeigen dieselben Ansichten wie die Figuren 1 und 2 für den erfindungsgemäßen Frontgassack 10. In Figur 4 ist die Frontwand 12 aus Gründen der Darstellung mit einer durchgezogenen Linie symbolisiert, während die zwei Seiten 14a, 14b der Umfangswand 14 mit gestrichelten Linien gezeichnet sind.

In der erfindungsgemäßen Ausführung ist die Frontwand 12 nicht komplett spiegelsymmetrisch bezüglich der Mittellinie M und der Längsrichtung L, sondern nur abschnittsweise.

In dem in den Figuren 3 und 4 oberen Bereich der Frontwand 12 ist eine einseitige seitliche Auswölbung 24 ausgebildet, die senkrecht von der Längsrichtung L über die restliche Kontur der Frontwand 12 übersteht. Dies ist in diesem Beispiel der einzige Unterschied zu der im Wesentlichen ovalen Frontwand 112 des Frontgassacks 100 aus dem Stand der Technik. Gegenüber dieser ist die Breite der Frontwand 12 senkrecht zur Längsrichtung L im Bereich der Auswölbung 24 um etwa 20 % bis 100 % erhöht.

In der zugehörigen ersten Seite 14a der Umfangswand 14 ist eine spiegelbildliche Auswölbung 26 ausgebildet. Ansonsten hat auch die erste Seite 14a der Umfangswand 14 dieselbe Form wie im Stand der Technik. Zu beachten ist, dass gemäß Figur 4 die einzelnen Zuschnittsteile übereinanderliegend dargestellt und die Auswölbungen 24, 26 entsprechend noch nicht miteinander vernäht sind.

Wie die Figur 4 zeigt, überlappen sich die Auswölbungen 24, 26, wenn die Umfangswand 14 entlang der Trennlinie 22 geteilt ist und die Zuschnittsteile in der in Figur 2 beschriebenen Anordnung ausgelegt sind. Dies verdeutlicht, dass nach wie vor die Umfangsränder 16, 18 von Frontwand 12 und Umfangswand 14 genauso miteinander verbunden werden können wie im Stand der Technik, wobei lediglich zusätzlich die beiden Auswölbungen 24, 26 in der Frontwand 12 und der Umfangswand 14 entlang deren Außenkonturen miteinander verbunden werden. Nach wie vor hat der Frontwand-Umfangsrand 16 dieselbe Länge wie der erste Abschnitt 18a des Umfangswand-Umfangsrands 18. Die beiden anderen Abschnitte 18b, 18c der Umfangswand 14 werden unter Freilassung des Fixierabschnitts 20 miteinander verbunden. Die miteinander verbundenen Auswölbungen 24, 26 ergeben im aufgeblasenen Frontgassack 10 sozusagen ein von der ansonsten zur Längsrichtung L symmetrischen Frontwand 12 seitlich abstehendes, aufgeblasenes Ohr.

Die allgemeine Außenkontur A ist für den erfindungsgemäßen Frontgassack 10 identisch zu dem nach dem Stand der Technik. Die generelle Form der Außenkonturen von Frontwand 12 und Umfangswand 14 lässt sich daher gemäß derselben Prinzipien wie für den bekannten SQS-Gassack problemlos abändern.

Auch beim erfindungsgemäßen Frontgassack 10 lässt sich wie oben beschrieben eine gedachte Linie S definieren. Diese gedachte Linie S beschreibt auch hier im Normalfall die kürzeste Strecke, die vom Fixierabschnitt 20 über die erste Seite 14a der Umfangswand 14, die Frontwand 12 und die zweite Seite 14b der Umfangwand 14 zurück zum Fixierabschnitt 20 verläuft.

Es hat sich herausgestellt, dass das zusätzliche Volumen der Auswölbung 24, 26 die Ausrichtung des Frontgassacks 10 im aufgeblasenen Zustand nicht beeinflusst, wenn die Auswölbung 24 nicht in einer Ebene E liegt. Diese Ebene E verläuft durch das Zentrum Z des Einblasmundes 50 (siehe Figur 5) und erstreckt sich vorzugsweise senkrecht zu der Fixierebene EF und schneidet die Fixierebene EF in einer im Wesentlichen horizontalen Linie. Diese horizontale Linie verläuft gemäß Figur 5 senkrecht zur Zeichenebene durch den Punkt Z.

Die Ebene E erstreckt sich üblicherweise auch in der Haupteinströmrichtung des Gases in den Frontgassack. Das bedeutet, der dem Einblasmund unmittelbar gegenüberliegende Abschnitt der Frontwand 12, zu dem die Ebene hin verläuft, ist auch derjenige Bereich, der beim Entfalten die Hauptlast aufnimmt. In diesem Abschnitt ist die Frontwand bezüglich der Mittellinie M symmetrisch ausgeführt, sodass die Kräfte gleichmäßig auf den Gassack wirken.

In den hier gezeigten Beispielen liegt die Auswölbung 24 in den Figuren 3 bis 7 oberhalb der gedachten Linie S und der Ebene E. Die Linie S kann die Ebene E schneiden oder zumindest abschnittsweise entlang der Ebene E verlaufen.

In dem unterhalb der Linie S und der Ebene E liegenden Bereich ist die Frontwand 12 symmetrisch bezüglich der Längsrichtung L, sodass hier die Mittellinie M auch eine Symmetrielinie für diesen Bereich der Frontwand 12 bildet.

In dem oberhalb der Linie S oder der Ebene E gelegenen Bereich der Frontwand 12 ist diese jedoch nicht spiegelsymmetrisch bezüglich der Längsrichtung L und der Mittellinie M, da die Auswölbung 24 nur auf einer Seite vorgesehen ist.

Wie in Figur 5 angedeutet ist, liegt ein Schnittpunkt P₁ einer Normalen N zur Fixierebene EF mit der Frontwand 12 auf der Mittellinie M. Auch in der erfindungsgemäßen Ausführung liegt entlang der Mittellinie M ein Normalenvektor V der Frontwand 12 in einer Ebene, die senkrecht auf der Fixierebene EF steht. Die Ebene E schneidet außerhalb der Fixierabschnitte 20 den Frontwand-Umfangsrand 16 an zwei Schnittpunkten P2, wobei die Länge einer Strecke entlang der jeweiligen Seite 14a, 14b der Umfangwand 14 von jedem dieser Schnittpunkte P2 zum Fixierabschnitt 20 im Wesentlichen gleich ist.

Im Bereich der Auswölbung 24 werden gedachte Schnittlinien W senkrecht zur Mittellinie M (siehe Figur 4), die die Breite der Frontwand 12 definieren, nicht durch die Mittellinie M mittig teilt.

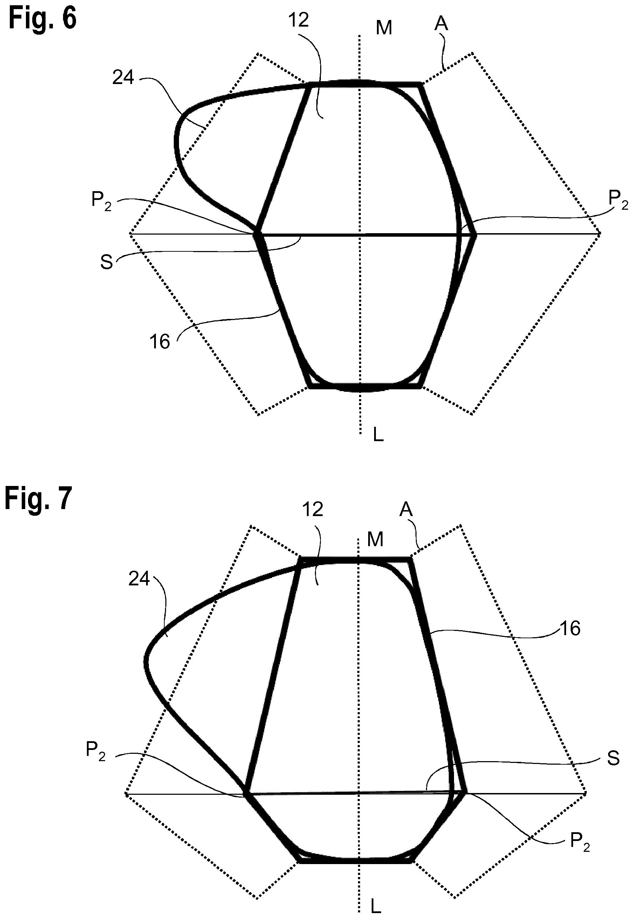

Wie die Figuren 6 und 7 zeigen, kann die Auswölbung 24 (und eine entsprechende Auswölbung 26 der Umfangswand 14) auf vielfältige Art und Weise ausgebildet sein. Es hat sich jedoch als günstig für die Ausrichtung des Frontgassacks 10 im aufgeblasenen Zustand herausgestellt, wenn die Auswölbung 24 die Form der Frontwand gegenüber dem herkömmlichen Gassack im Bereich der Ebene E (bezogen auf den aufgeblasenen Zustand) oder der Linie S (bezogen auf den ausgebreiteten Zustand der Zuschnittsteile) nicht verändert, also ausschließlich oberhalb und/oder unterhalb Ebene E bzw. der Linie S ausgebildet ist.

Die Figuren 6 und 7 zeigen auch einen Vergleich der Ausbildung der Auswölbung 24 in der Frontwand 12 für unterschiedlich gestaltete Grundformen des zugrundegelegten SQS-Gassacks, wobei die gedachte Linie S die Frontwand 12 bezüglich der Längsrichtung nicht mittig teilen muss (siehe Figur 7).

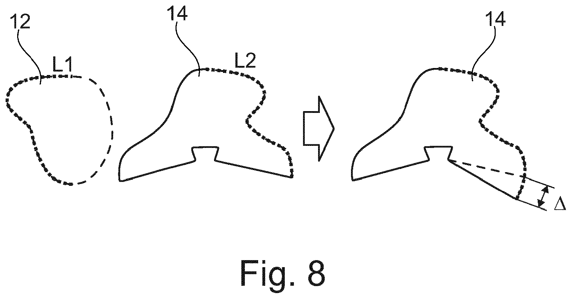

Gegebenenfalls kann es notwendig sein, das Volumen des Frontgassacks 10 anzupassen, um die Form des Frontgassacks 10 im aufgeblasenen Zustand zu verbessern. In diesem Fall kann, wie in Figur 8 angedeutet, die Umfangswand 14 um ein kleines Stück Δ verlängert werden, indem ausgehend vom Fixierabschnitt 20 ein Kreissegment von etwa 5° bis 10° im Bereich des dritten Abschnitts 18c des Umfangswand-Umfangsrands 18 hinzugefügt wird. Hiermit lassen sich etwaige Abweichungen der Längen L₁ und L₂ der Umfangsränder 16, 18a von Frontwand 12 und Umfangswand 14 im Bereich der Auswölbungen 24, 26 ausgleichen.

Der Frontgassack 10 ist so angeordnet, dass die Auswölbung 24 in den Fahrzeuginnenraum hinein gerichtet ist, um einen Fahrzeuginsassen insbesondere bei einem versetzten Frontalaufprall zu schützen.

Das Verbinden einzelner Umfangsrandabschnitte 16, 18a, 18b, 18c erfolgt hier beispielsweise durch Nähen, könnte aber auch durch Kleben oder Schweißen realisiert werden. In gewissen Fällen ist es auch denkbar, einzelne Abschnitte der Frontwand 12 und der Umfangswand 14 einstückig miteinander auszubilden.

Insbesondere kann selbstverständlich jedes der Zuschnittsteile der Frontwand 12 und der Umfangswand 14 entweder in der in Figur 3 gezeigten Form einstückig zugeschnitten sein oder aber aus beliebig vielen einzelnen Zuschnittsabschnitten zusammengesetzt sein.

Jedoch gilt sowohl für die Frontwand 12 als auch für die Umfangswand 14, dass diese ohne Befestigung längs der Umfangsränder und separat voneinander, also in einem Zustand, in dem ihre Umfangsränder 16, 18 noch nicht miteinander verbunden sind, vollständig flach ausbreitbar sind. Sie weisen also keine an sich dreidimensionalen Bereiche auf, die von einer ebenen Unterlage abstehen würden, indem Abschnitte abgenäht sind, um dreidimensionale Bereiche zu schaffen. Solche dreidimensionalen Bereiche würden auch gebildet werden, wenn aus einem Zuschnittsteil ein dreieckiger Abschnitt ausgeschnitten werden würde und die entstehenden Ränder miteinander vernäht werden würden. Eine solche dreidimensionale Struktur soll keines der Teile des erfindungsgemäßen Frontgassacks haben.

In dieser Anmeldung wird eine idealisierte Gassackform beschrieben. Bei einem realen Frontgassack, der nach den hier vorgestellten erfindungsgemäßen Gedanken ausgebildet ist, sind die geometrischen Verhältnisse selbstverständlich weniger deutlich ausgeprägt und können von den in dieser Anmeldung gemachten Angaben für den idealisierten Gassack abweichen. Es ist auch offensichtlich, dass für eine vorgegebene dreidimensionale Endform des Frontgassacks 10 eine unendliche Anzahl an Möglichkeiten besteht, die exakte Form der einzelnen Zuschnittsteile zu variieren, ohne vom Prinzip der Erfindung abzuweichen. Daher ist hier nur ein spezifisches Beispiel dargestellt. Alle anderen Varianten, die zu einer identischen Form des Frontgassacks 10 führen, sind jedoch genauso von der Erfindung umfasst.

## Patentansprüche

1. Frontgassack mit einer aus einer Frontwand (12) und einer Umfangswand (14) gebildeten Außenhülle, wobei an der Umfangswand (14) ein Fixierabschnitt (20) zur fahrzeugfesten Befestigung des Frontgassacks (10) vorgesehen ist,
und die Frontwand (12) eine Prallfläche für einen Fahrzeuginsassen darstellt, und an einem Umfangsrand (16) umlaufend mit einem ersten Abschnitt (18a) eines Umfangsrands (18) der Umfangswand (14) verbunden ist, wobei die Länge des Frontwand-Umfangsrands (16) und des ersten Abschnitts (18a) des Umfangswand-Umfangsrands (18) gleich sind, und
zumindest ein zweiter und ein dritter Abschnitt (18b, 18c) des Umfangswand-Umfangsrands (18) miteinander verbunden sind,
wobei die Frontwand (12) bezogen auf eine Einbauausrichtung eine Längsrichtung (L) hat, die durch ein unteres und ein oberes Ende der Frontwand (12) definiert ist,
und die Frontwand (12) bezüglich der Längsrichtung (L) einseitig eine seitliche Auswölbung (24) aufweist und nicht spiegelsymmetrisch ist, **dadurch gekennzeichnet, dass**
der erste Abschnitt (18a) des Umfangsrands (18) der Umfangswand (14) eine zur seitlichen Auswölbung (24) der Frontwand (12) spiegelbildliche seitliche Auswölbung (26) aufweist.

2. Frontgassack nach einem der vorhergehenden Ansprüche, **dadurch gekennzeichnet, dass** die Frontwand (12) bezogen auf den aufgeblasenen, eingebauten Zustand einen durch den Fixierabschnitt gebildeten Einblasmund und einen diesem unmittelbar gegenüberliegenden Frontwandabschnitt hat, wobei die Frontwand (12) nur oberhalb des Frontwandabschnitts unsymmetrisch ist und/oder eine Auswölbung (24) hat.

3. Frontgassack nach einem der vorhergehenden Ansprüche, **dadurch gekennzeichnet, dass** der Frontgassack eine durch den Fixierabschnitt gebildete Fixierebene (EF) zur modulseitigen Befestigung hat und im aufgeblasenen, eingebauten Zustand des Frontgassacks (10) eine durch das Zentrum des durch den Fixierabschnitts (20) gebildeten Einblasmunds verlaufende und die Fixierebene (EF) in einer horizontalen Linie schneidende Ebene (E) vorhanden ist, die zu dem, dem Einblasmund unmittelbar gegenüberliegenden Frontwandabschnitt verläuft, wobei die seitliche Auswölbung (24) der Frontwand (12) entlang der Längsrichtung (L) und versetzt zu der Ebene (E) angeordnet ist.

4. Frontgassack nach Anspruch 3, **dadurch gekennzeichnet, dass** die Frontwand (12) in der Auswölbung (24) breiter ist als im Bereich der Ebene (E).

5. Frontgassack nach einem der Ansprüche 3 und 4, **dadurch gekennzeichnet, dass** eine gedachte Linie (S) die kürzeste Strecke vom Fixierabschnitt (20) über Umfangswand (14) und Frontwand (12) zurück zum Fixierabschnitt (20) bildet und diese Linie (S) zumindest abschnittsweise in der Ebene (E) verläuft oder sie schneidet.

6. Frontgassack nach einem der Ansprüche 3 bis 5, **dadurch gekennzeichnet, dass** die Ebene (E) senkrecht zu der durch den Fixierabschnitt gebildeten Fixierebene (EF) verläuft.

7. Frontgassack nach einem der Ansprüche 3 bis 6, **dadurch gekennzeichnet, dass** die Frontwand (12) bezogen auf den eingebauten, entfalteten Zustand des Frontgassacks, eine gedachte, vertikale Mittellinie (M) aufweist, wobei die Frontwand (12) im Bereich der Ebene (E) spiegelsymmetrisch bezüglich der Mittellinie (M) ist und im Bereich der seitlichen Auswölbung (24) nicht spiegelsymmetrisch zur Mittellinie (M) ausgebildet ist.

8. Frontgassack nach Anspruch 7, **dadurch gekennzeichnet, dass** entlang der Mittellinie (M) die Normalenvektoren (V) der Frontwand (12) in einer Ebene liegen, die senkrecht auf der Fixierebene (E) steht.

9. Frontgassack nach einem der Ansprüche 3 bis 8, **dadurch gekennzeichnet, dass** die Frontwand (12), bezogen auf den eingebauten, entfalteten Zustand des Frontgassacks, unterhalb der Ebene (E) bezüglich der Mittellinie (M) spiegelsymmetrisch ausgebildet ist, und oberhalb zumindest im Bereich der Auswölbung (24) nicht.

10. Frontgassack nach einem der Ansprüche 3 bis 9, **dadurch gekennzeichnet, dass** die Ebene (E) den Frontwand-Umfangsrand (16) außerhalb des Fixierabschnitts an zwei Schnittpunkten (P₂) schneidet, und dass die Länge einer Strecke entlang der jeweiligen Seite (14a, 14b) der Umfangswand (14) von jedem dieser Schnittpunkte (P₂) zum Fixierabschnitt (20) im Wesentlichen gleich ist.

11. Frontgassack nach einem der vorhergehenden Ansprüche, **dadurch gekennzeichnet, dass** der Umfangsrand (18) der Umfangswand (14) durch den ersten, den zweiten, den dritten Abschnitt (18a, 18b, 18c) und den Fixierabschnitt (20) gebildet ist und der Fixierabschnitt (20) zwischen dem zweiten und dem dritten Abschnitt (18b, 18c) liegt, wobei der zweite und der dritte Abschnitt (18b, 18c) gleich lang sind.

12. Frontgassack nach einem der vorhergehenden Ansprüche, **dadurch gekennzeichnet, dass** die Umfangswand (14) durch ein einziges, zusammenhängendes Zuschnittsteil gebildet lässt.

13. Frontgassack nach einem der vorhergehenden Ansprüche, **dadurch gekennzeichnet**, die Frontwand (12) durch ein einziges, zusammenhängendes Zuschnittsteil gebildet ist.

14. Frontgassack nach einem der vorhergehenden Ansprüche, **dadurch gekennzeichnet, dass** die Frontwand (12) und die Umfangswand (14) in noch nicht miteinander verbundenem Zustand jeweils separat voneinander flach ausbreitbar sind.

## Claims

1. A front airbag comprising an outer sheath formed by a front wall (12) and a circumferential wall (14), wherein a fixing portion (20) for securing the front airbag (10) tightly to the vehicle is provided on the circumferential wall (14).
and the front wall (12) constitutes an impact surface for a vehicle occupant and at a peripheral edge (16) is circumferentially connected to a first portion (18a) of a peripheral edge (18) of the circumferential wall (14), wherein the length of the front wall peripheral edge (16) is equal to the length of the first portion (18a) of the circumferential wall peripheral edge (18) and
at least a second and a third portion (18b, 18c) of the circumferential wall peripheral edge (18) are connected to each other,
wherein the front wall (12) related to a mounting orientation has a longitudinal direction (L) which is defined by a lower and upper end of the front wall (12),
and the front wall (12) has a lateral bulge (24) on one side with respect to the longitudinal direction (L) and is not mirror-symmetrical, **characterized in that** the first portion (18a) of the peripheral edge (18) of the circumferential wall (14) includes a lateral bulge (26) being mirror-symmetrical to the lateral bulge (24) of the front wall (12).

2. The front airbag according to any one of the preceding claims, **characterized in that** the front wall (12) related to the inflated mounted state, has an inflation orifice formed by the fixing portion and a front wall portion directly facing the latter, wherein only above the front wall portion the front wall (12) is non-symmetrical and/or includes a bulge (24).

3. The front airbag according to any one of the preceding claims, **characterized in that** the front airbag includes a fixing plane (EF) formed by the fixing portion for securing on the module side and in the inflated mounted state of the front airbag (10) a plane (E) extending across the center of the inflation orifice formed by the fixing portion (20) and intersecting the fixing plane (EF) in a horizontal line is provided which extends to the front wall portion directly facing the inflation orifice, wherein the lateral bulge (24) of the front wall (12) is arranged along the longitudinal direction (L) and offset against the plane (E).

4. The front airbag according to claim 3, **characterized in that** the front wall (12) is wider in the bulge (24) than in the area of the plane (E).

5. The front airbag according to any one of the claims 3 and 4, **characterized in that** an imaginary line (S) constitutes the shortest distance from the fixing portion (20) via the circumferential wall (14) and front wall (12) back to the fixing portion (20) and said line (S) at least in portions extends in the plane (E) or intersects the same.

6. The front airbag according to any one of the claims 3 to 5, **characterized in that** the plane (E) extends perpendicularly to the fixing plane (EF) formed by the fixing portion.

7. The front airbag according to any one of the claims 3 to 6, **characterized in that** the front wall (12) related to the mounted deployed state of the front airbag includes an imaginary vertical center line (M), wherein in the area of the plane (E) the front wall (12) is mirror-symmetrical with respect to the center line (M) and in the area of the lateral bulge (24) it is not mirror-symmetrical to the center line (M).

8. The front airbag according to claim 7, **characterized in that** along the center line (M) the normal vectors (V) of the front wall (12) are located in a plane which is perpendicular to the fixing plane (E).

9. The front airbag according to any one of the claims 3 to 8, **characterized in that** the front wall (12), related to the mounted deployed state of the front airbag, below the plane (E) is formed to be mirror-symmetrical relative to the center line (M) and is not mirror-symmetrical above the same at least in the area of the bulge (24).

10. The front airbag according to any one of the claims 3 to 9, **characterized in that** the plane (E) intersects the front wall peripheral edge (16) outside the fixing portion at two intersections (P₂) and **in that** the length of a distance along the respective side (14a, 14b) of the circumferential wall (14) from each of said intersections (P₂) to the fixing portion (20) is substantially equal.

11. The front airbag according to any one of the preceding claims, **characterized in that** the peripheral edge (18) of the circumferential wall (14) is formed by the first, second, third portions (18a, 18b, 18c) and the fixing portion (20) and the fixing portion (20) is located between the second and third portions (18b, 18c), the second and third portions (18b, 18c) being equal in length.

12. The front airbag according to any one of the preceding claims, **characterized in that** the circumferential wall (14) is formed by a single coherent cut part.

13. The front airbag according to any one of the preceding claims, **characterized in that** the front wall (12) is formed by a single coherent cut part.

14. The front airbag according to any one of the preceding claims, **characterized in that** the front wall (12) and the circumferential wall (14) can be flatly spread separately from each other in a state not yet connected to each other.

## Revendications

1. Coussin gonflable frontal avec une coque externe formée d'une paroi avant (12) et d'une paroi périphérique (14), pour lequel une section de fixation (20) est prévue sur la paroi périphérique (14) pour la fixation du coussin gonflable frontal (10) au véhicule,
et la paroi avant (12) représente une surface déflectrice pour un occupant du véhicule, et est reliée sur un bord périphérique (16) circonférentiellement à une première section (18a) d'un bord périphérique (18) de la paroi périphérique (14), pour lequel les longueurs du bord périphérique de la paroi avant (16) et de la première section (18a) du bord périphérique de la paroi périphérique (18) sont identiques, et
au moins une deuxième et une troisième sections (18b, 18c) du bord périphérique de paroi périphérique (18) sont reliées l'une à l'autre,
pour lequel la paroi avant (12) a une direction longitudinale (L) basée sur une orientation d'installation, qui est définie par une extrémité inférieure et une extrémité supérieure de la paroi avant (12),
et la paroi avant (12) présente un renflement latéral (24) sur un côté par rapport à la direction longitudinale (L) et n'est pas le symétrique en miroir, **caractérisé en ce que** la première section (18a) du bord périphérique (18) de la paroi périphérique (14) possède un renflement latéral inversé en miroir (26) d'un renflement latéral (24) de la paroi avant (12).

2. Coussin gonflable frontal selon l'une des revendications précédentes, **caractérisé en ce que** la paroi avant (12) présente, par rapport à l'état installé et gonflé, un orifice d'injection formée par la section de fixation et une section de paroi avant directement opposée à celle-ci, pour lequel la paroi avant (12) n'est asymétrique qu'au-dessus de la section de paroi avant et/ou présente un renflement (24).

3. Coussin gonflable frontal selon l'une des revendications précédentes, **caractérisé en ce que** le coussin gonflable frontal présente un plan de fixation (EF) formé par la zone fixation pour fixation côté module et à l'état installé et gonflé du coussin gonflable frontal (10) se trouve un plan (E) passant par le centre de l'orifice d'injection formée par la section de fixation (20) et coupant le plan de fixation (EF) sur une ligne horizontale, qui s'étend jusqu'à la section de paroi avant directement opposée à l'orifice d'injection, pour lequel le renflement latéral (24) de la paroi avant (12) est disposé le long de la direction longitudinale (L) et est décalé par rapport au plan (E).

4. Coussin gonflable frontal selon la revendication 3, **caractérisé en ce que** la paroi avant (12) au niveau du le renflement (24) est plus large que dans la zone du plan (E).

5. Coussin gonflable frontal selon l'une des revendications 3 et 4, **caractérisé en ce qu'**une ligne imaginaire (S) forme le trajet le plus court depuis la section de fixation (20) sur la paroi périphérique (14) et la paroi avant (12) remontant vers la section de fixation (20) et cette ligne (S) court au moins partiellement dans le plan (E) ou le coupe.

6. Coussin gonflable frontal selon l'une des revendications 3 à 5, **caractérisé en ce que** le plan (E) s'étend perpendiculairement au plan de fixation (EF) formé par la section de fixation.

7. Coussin gonflable frontal selon l'une des revendications 3 à 6, **caractérisé en ce que** la paroi avant (12) présente une ligne médiane verticale imaginaire (M) par rapport à l'état installé et déplié du coussin gonflable frontal, pour lequel la paroi avant (12) dans la zone du plan (E) est symétrique en miroir par rapport à la ligne centrale (M) et est conçue non-symétrique en miroir par rapport à la ligne centrale (M) dans la zone du renflement latéral (24).

8. Coussin gonflable frontal selon la revendication 7, **caractérisé en ce que** le long de la ligne médiane (M) les vecteurs normaux (V) de la paroi avant (12) se trouvent dans un plan qui est perpendiculaire au plan de fixation (E).

9. Coussin gonflable frontal selon l'une des revendications 3 à 8, **caractérisé en ce que** la paroi avant (12), en fonction de l'état installé et déplié du coussin gonflable frontal, est conçue symétriquement au-dessous du plan (E) par rapport à la ligne médiane (M), et pas au-dessus au moins dans la zone du renflement (24).

10. Coussin gonflable frontal selon l'une des revendications 3 à 9, **caractérisé en ce que** le plan (E) coupe le bord périphérique de la paroi avant (16) à l'extérieur de la section de fixation à deux points d'intersection (P2), et **en ce que** la longueur d'une distance le long du côté respectif (14a,14b) de la paroi périphérique (14) de chacun de ces points d'intersection (P2) avec la section de fixation (20) est essentiellement la même.

11. Coussin gonflable frontal selon l'une des revendications précédentes, **caractérisé en ce que** le bord périphérique (18) de la paroi périphérique (14) est formé par la première, la deuxième, la troisième section (18a, 18b, 18c) et la section de fixation (20) et que la section de fixation (20) se situe entre les deuxième et troisième sections (18b, 18c), pour lequel les deuxième et troisième sections (18b, 18c) sont de longueur égale.

12. Coussin gonflable frontal selon l'une des revendications précédentes, **caractérisé en ce que** la paroi périphérique (14) peut être formée par une seule pièce découpée continue.

13. Coussin gonflable frontal selon l'une des revendications précédentes, **caractérisé en ce que** la paroi avant (12) est formée par une seule pièce découpée continue.

14. Coussin gonflable frontal selon l'une des revendications précédentes, **caractérisé en ce que** la paroi avant (12) et la paroi périphérique (14) peuvent chacune être écartées à plat l'une de l'autre lorsqu'elles ne sont pas encore reliées l'une à l'autre.
